# EUROPEAN PATENT SPECIFICATION

(11) **EP 4 039 356 B1**
(45) Date of publication and mention of the grant of the patent: **30.10.2024**
(21) Application number: 20871056.6
(22) Date of filing: 18.09.2020
(51) Int. Cl.: B01D 53/94, F01N 3/022, F01N 3/08, F01N 3/28, B01J 23/63, B01J 29/072

(54) **EXHAUST GAS PURIFICATION DEVICE**
ABGASREINIGUNGSVORRICHTUNG
DISPOSITIF DE PURIFICATION DE GAZ D'ÉCHAPPEMENT

(30) Priority: 03.10.2019 JP 2019183019
(43) Date of publication of application: 10.08.2022
(73) Proprietor: N.E. Chemcat Corporation, Tokyo 105-6124 (JP)
(72) Inventor: MATSUNAMI, Yukihiko, Tokyo 105-6124 (JP); KAYADA, Yuto, Tokyo 105-6124 (JP); ANDO, Ryuji, Tokyo 105-6124 (JP)
(74) Representative: TBK
(86) International application number: PCT/JP2020/035509
(87) International publication number: WO 2021/065577

(56) References cited:
- EP-A1- 2 535 102
- EP-A1- 2 692 430
- WO-A1-2012/002052
- WO-A1-2012/132095
- WO-A1-2012/132678

## Description

### [Technical Field]

The present invention relates to an exhaust gas purification apparatus or the like for purifying an exhaust gas discharged from a lean combustion engine.

### [Background Art]

Regarding techniques for purifying an exhaust gas generated from an internal-combustion engine such as a lean combustion engine, many proposals have been heretofore made. For example, exhaust gas purification apparatuses are widely known in which a diesel oxidation catalyst (DOC) for purifying harmful components in the exhaust gas, such as carbon monoxide (CO), hydrogen carbide (HC) and nitrogen oxide (NOx), a diesel particulate filter (DPF) for collecting particulate matters (PMs) contained in the exhaust gas, such as soot, and the like are arranged in an exhaust gas flow channel. Further, in recent years, a catalyst-coated DPF in which a catalyst layer is provided by coating a DPF with a catalyst slurry and firing the catalyst slurry for suppressing discharge of particulate matters and removing CO/HC/NOₓ etc., at the same time, and the like have been proposed from the viewpoint of saving the mounting space, etc.

A urea SCR (selective catalytic reduction) system has been developed as a catalyst which performs purification by selectively reducing nitrogen oxide (NOₓ) contained in an exhaust gas generated from a lean combustion engine. In the urea SCR system, a SCR catalyst which adsorbs ammonia generated by hydrolysis of urea is employed, and NOₓ is chemically reacted with ammonia on the SCR catalyst to purify NOₓ to nitrogen and water. In the urea SCR catalyst, NOₓ is ultimately reduced to N₂ mainly in accordance with the reaction formulae [1] to [3] shown below.

4NO + 4NH₃ + O₂ → 4N₂ + 6H₂O ... (1)

6NO₂ + 8NH₃ → 7N₂ + 12H₂O ... (2)

NO + NO₂ + 2NH₃ → 2N₂ + 3H₂O ... (3)

As such a SCR catalyst, transition metal ion-exchange zeolite having a transition metal such as copper (Cu) or iron (Fe) supported on zeolite (transition metal element-supported zeolite) is widely used (see Patent Literatures 1 to 3).

EP 2 535 102 A1 relates to an exhaust gas purification catalyst apparatus arranged with a spraying means of a reducing agent selected from ammonia or urea, and two selective reduction-type catalysts (SROC) in series, in a flow passage of exhaust gas of a lean burn engine, to oxidize nitrogen monoxide (NO) in exhaust gas, as well as to reduce a nitrogen oxide by the reducing agent which is sprayed in exhaust gas, to oxidize excess ammonia, wherein the SROC has a lower catalyst layer (A) and an upper catalyst layer (B) at the surface of an integral structure-type carrier (C), wherein the lower catalyst layer (A) contains the following components (i) a noble metal component, component (ii) alumina, titania, silica, zirconia, tungsten oxide, a transition metal oxide, a rare earth oxide, and a complex oxide thereof, and component (iii) zeolite; on the other hand, the upper catalyst layer (B) does not substantially contain the following component (i) and contains the following component (iii); the component (i) of the lower catalyst layer (A1) of the selective reduction-type catalyst (SROC1) at the forward stage contains a platinum component in an amount of 90% by weight or more in metal equivalent; and the component (i) of the lower catalyst layer (A2) of the selective reduction-type catalyst (SROC2) at the backward stage contains a palladium component in an amount of 40% by weight or more inmetal equivalent.

EP 2 692 430 A1 relates to an ammonia oxidation catalyst (AMOX) for oxidizing and removing surplus ammonia, in selectively reducing nitrogen oxides by adding urea or ammonia and using a selective catalytic reduction (SCR) catalyst, into exhaust gas, wherein the ammonia oxidation catalyst is made by coating at least two catalyst layers having a catalyst layer (lower layer) including a catalyst supported a noble metal element on a composite oxide (A) having titania and silica as main components, and a catalyst layer (upper layer) including a composite oxide (C) consisting of tungsten oxide, ceria, and zirconia, at the surface of an integral structure-type substrate, wherein a composition of the composite oxide (C) is tungsten oxide: 1 to 50% by weight, ceria: 1 to 60% by weight, and zirconia: 30 to 90% by weight.

### [Citation List]

### [Patent Literature]

[Patent Literature 1] International Publication No. WO 2010/021315
[Patent Literature 2] Japanese Patent Laid-Open No. 2015-196115
[Patent Literature 3] Japanese Patent Laid-Open No. 2016-195992

### [Summary of Invention]

### [Technical Problem]

Vehicle emissions control has increasingly tightened in recent years, representative examples including Emissions Control Stages V and IV enforced in European Union (EU), and accordingly, further improvement of the purification performance of exhaust gas purification catalysts has been required.

The conventional SCR catalyst obtained using transition metal ion-exchange zeolite tends to improve in NOₓ removal performance depending on the amount of ammonia adsorbed to the SCR catalyst. Among other SCR catalyst materials, transition metal ion-exchange zeolite is widely employed in urea SCR systems because one with a relatively large maximum amount of NH₃ adsorbed can be easily obtained, good usability is attained, and higher NOₓ removal performance is expected.

However, the findings by the present inventors have shown that a SCR catalyst obtained using the conventional transition metal ion-exchange zeolite (zeolite-based catalyst material) has insufficient NOₓ removal performance under a condition of a low amount of ammonia adsorbed, and there is a tendency that high NOₓ removal performance desired cannot be obtained in a practical sense unless a sufficient amount of ammonia (e.g. about 40 wt% or more) is adsorbed with respect to the maximum amount of NH₃ adsorbed in the SCR catalyst.

It is considered that ammonia (or urea used as a precursor of ammonia) may be excessively supplied (injected) for solving such a problem. However, when an excessive amount of ammonia or the like is supplied in this way, the problem arises that the amount of ammonia flowing out to the downstream side of an exhaust gas flow channel (NH₃ slip) increases, and a large amount of an ammonia oxidation catalyst or the like for purifying the ammonia is necessary. When the amount of NH₃ slip is increased, the problem arises that it is necessary to redesign and evaluate the system because there may be cases where admissibility requirements of self-diagnosis functions such as OBD2 (On-board diagnostics 2) and J-OBD (Japan on-board diagnosis) are not met. On the other hand, high NOₓ removal performance desired can be obtained by increasing the amount of transition metal ion-exchange zeolite used, but in this case, it is necessary to supply ammonia or the like in a more excessive amount, so that a larger amount of an ammonia oxidation catalyst or the like is needed. Moreover, since transition metal ion-exchange zeolite is relatively expensive among catalyst materials used as SCR catalysts, the increase of the amount of transition metal ion-exchange zeolite used leads to an increase in cost per unit catalyst coating mass of the SCR catalyst.

The present invention has been made in view of the above-described problems. That is, an object of the present invention is to provide a selective reducing catalyst, an exhaust gas purification apparatus and the like with excellent NOₓ removal performance and economic efficiency, which involve relatively low cost per unit catalyst coating mass, and have improved NOₓ removal performance under a condition of a relatively low to relatively high amount of ammonia adsorbed.

### [Solution to Problem]

The present inventors have extensively conducted studies for solving the above-described problems. As a result, it has been found that the above-described problems can be solved by employing a layered catalyst formed of a predetermined catalyst material as a SCR catalyst, leading to completion of the present invention.

That is, the present invention provides various specific aspects shown below.
(1) An exhaust gas purification apparatus for lean combustion engines, comprising at least: one or more oxidation catalysts which are arranged in an exhaust gas flow channel and oxidize at least one selected from the group consisting of CO, HC, NO and NH₃ in an exhaust gas discharged from a lean combustion engine; a reducing agent supplying unit for supplying one or more reducing agents selected from the group consisting of a urea component and an ammonia component into the exhaust gas flow channel; and one or more first selective reducing catalysts arranged on the downstream side of the exhaust gas flow channel with respect to the reducing agent supplying unit and which adsorb ammonia and bring the ammonia into contact with NOₓ to perform reduction, wherein the first selective reducing catalyst comprises a first base material and a layered catalyst provided on the first base material, the layered catalyst comprises at least a first catalyst layer containing at least zeolite and a transition metal element supported on the zeolite, and a second catalyst layer containing at least an oxygen storage and release material and a transition metal element, and at least the first catalyst layer and the second catalyst layer are provided in this order on the first base material, wherein the first catalyst layer contains at least the zeolite and one or more selected from the group consisting of Cu, Fe, Ce, Mn, Ni, Co, Ca, Ag, Rh, Ru, Pd, Pt, Ir and Re supported on the zeolite, and the second catalyst layer contains at least the oxygen storage and release material and one or more transition metal elements selected from the group consisting of W, Nb and Ti supported on the surface of the oxygen storage and release material.
(2) The exhaust gas purification apparatus for lean combustion engines according to (1), wherein the first base material is one or more selected from the group consisting of a wall flow type catalyst carrier and a flow-through type catalyst carrier.
(3) The exhaust gas purification apparatus for lean combustion engines according to (1) or (2), further comprising one or more ammonia oxidation catalysts for oxidizing and removing ammonia on the downstream side of the exhaust gas flow channel of the first selective reducing catalyst.
(4) The exhaust gas purification apparatus for lean combustion engines according to any one of (1) to (3), further comprising a particulate filter, which collects particulate components in the exhaust gas and combusts or oxidizes and removes the particulate components, on the upstream side and/or the downstream side of the exhaust gas flow channel of the first selective reducing catalyst.
(5) The exhaust gas purification apparatus for lean combustion engines according to (4), wherein the particulate filter is a catalyst-coated particulate filter comprising at least an integral structure type carrier and a noble metal-containing catalyst layer provided on the integral structure type carrier.
(6) The exhaust gas purification apparatus for lean combustion engines according to any one of (1) to (5), comprising a plurality of the oxidation catalysts, wherein at least one of the oxidation catalysts is arranged on the upstream side and/or the downstream side of the exhaust gas flow channel with respect to the first selective reducing catalyst.
(7) The exhaust gas purification apparatus for lean combustion engines according to any one of (1) to (6), further comprising a second selective reducing catalyst, which adsorbs ammonia and brings the ammonia into contact with NOₓ to perform reduction, on the upstream side and/or the downstream side of the exhaust gas flow channel of the first selective reducing catalyst.
(8) The exhaust gas purification apparatus for lean combustion engines according to any one of (1) to (7), wherein the oxygen storage and release material contains one or more selected from the group consisting of a ceria-based composite oxide and a ceria-zirconia-based composite oxide.
(9) The exhaust gas purification apparatus for lean combustion engines according to any one of (1) to (8), wherein the zeolite is zeolite having an oxygen six-membered ring structure, an oxygen double six-membered ring structure, an oxygen eight-membered ring structure and/or an oxygen twelve-membered ring structure.
(10) The exhaust gas purification apparatus for lean combustion engines according to any one of (1) to (9), wherein the zeolite is one or more selected from the group consisting of CHA, AEI, AFX, KFI, SFW, MFI and BEA.
(11) The exhaust gas purification apparatus for lean combustion engines according to any one of (1) to (10), wherein the maximum amount of NH₃ adsorbed per unit volume of the second catalyst layer is smaller than the maximum amount of NH₃ adsorbed per unit volume of the first catalyst layer under a condition of NH₃ adsorption at 33% of the saturated adsorption amount.
(12) The exhaust gas purification apparatus for lean combustion engines according to any one of (1) to (11), wherein the first base material is zone-coated with the first catalyst layer and/or the second catalyst layer.
(13) The exhaust gas purification apparatus for lean combustion engines according to any one of (1) to (12), further comprising a heating device for heating the exhaust gas passing through the exhaust gas flow channel.
(14) The exhaust gas purification apparatus for lean combustion engines according to any one of (1) to (13), further comprising a plasma generating apparatus for plasma-treating the exhaust gas passing through the exhaust gas flow channel.
   The present disclosure also provides novel selective reducing catalysts usable in the above-described exhaust gas purification apparatuses for lean combustion engines and other exhaust gas purification apparatuses, for example those shown below.
(16) A selective reducing catalyst which adsorbs ammonia and brings the ammonia into contact with NOₓ to perform reduction, wherein the selective reducing catalyst comprises a first base material and a layered catalyst provided on the first base material, the layered catalyst comprises at least a first catalyst layer containing at least zeolite and a transition metal element supported on the zeolite, and a second catalyst layer containing at least an oxygen storage and release material and a transition metal element, and at least the first catalyst layer and the second catalyst layer are provided in this order on the first base material.
(17) The selective reducing catalyst according to (16), wherein the first base material is one or more selected from the group consisting of a wall flow type catalyst carrier and a flow-through type catalyst carrier. (18) The selective reducing catalyst according to (16) or (17), wherein the first catalyst layer contains at least the zeolite and one or more selected from the group consisting of Cu, Fe, Ce, Mn, Ni, Co, Ca, Ag, Rh, Ru, Pd, Pt, Ir and Re and supported on the zeolite, and the second catalyst layer contains at least the oxygen storage and release material and one or more transition metal elements selected from the group consisting of W, Nb and Ti.
(19) The selective reducing catalyst according to any one of (16) to (18), wherein the oxygen storage and release material contains one or more selected from the group consisting of a ceria-based composite oxide and a ceria-zirconia-based composite oxide.
(20) The selective reducing catalyst according to any one of (16) to (19), wherein the zeolite is zeolite having an oxygen six-membered ring structure, an oxygen double six-membered ring structure, an oxygen eight-membered ring structure and/or an oxygen twelve-membered ring structure.
(21) The selective reducing catalyst according to any one of (16) to (20), wherein the zeolite is one or more selected from the group consisting of CHA, AEI, AFX, KFI, SFW, MFI and BEA.
(22) The selective reducing catalyst according to any one of (16) to (21), wherein the maximum amount of NH₃ adsorbed per unit volume of the second catalyst layer is smaller than the maximum amount of NH₃ adsorbed per unit volume of the first catalyst layer under a condition of NH₃ adsorption at 33% of the saturated adsorption amount.
(23) The selective reducing catalyst according to any one of (16) to (22), wherein the first base material is zone-coated with the first catalyst layer and/or the second catalyst layer.

### [Advantageous Effects of Invention]

According to the present invention, it is possible to provide a selective reducing catalyst, an exhaust gas purification apparatus and the like with excellent NOₓ removal performance and economic efficiency, which involve relatively low cost per unit catalyst coating mass, and have improved NOₓ removal performance under a condition of a relatively low to relatively high amount of ammonia adsorbed. According to the present invention, a layered catalyst is used, so that it is possible to realize a selective reducing catalyst, an exhaust gas purification apparatus and the like in which NOₓ removal performance quickly rises against injection of a reducing agent and the response to the amount of the reducing agent adsorbed is improved, and it is possible to achieve higher NOₓ removal performance.

### [Brief Description of Drawings]

[Figure 1] Figure 1 is a schematic sectional view showing a configuration of a selective reducing catalyst SCR_{L} (L1/L2 layered) according to an embodiment.
[Figure 2] Figure 2 is a schematic view showing a general configuration of an exhaust gas purification apparatus 100 for lean combustion engines according to an embodiment in which a selective reducing catalyst SCR_{L} (L1/L2 layered) is used.
[Figure 3] Figure 3 is a diagram illustrating a comparison of a selective reducing catalyst SCR_{L} (L1/L2 layered) with a prior art selective reducing catalyst SCR₁ (L1 single layer) and selective reducing catalyst SCR₂ (L2 single layer), which is a conceptual view showing the catalyst performance of each of these catalysts (i.e. a relationship between the NOₓ removal rate and the amount of NH₃ adsorbed, and the occurrence of NH₃ slip) .
[Figure 4] Figure 4 is a schematic view showing a general configuration of a modification of the exhaust gas purification apparatus 100 for lean combustion engines.
[Figure 5] Figure 5 is a schematic view showing a general configuration of a modification of the exhaust gas purification apparatus 100 for lean combustion engines.
[Figure 6] Figure 6 is a schematic view showing a general configuration of a modification of the exhaust gas purification apparatus 100 for lean combustion engines.
[Figure 7] Figure 7 is a schematic view showing a general configuration of a modification of the exhaust gas purification apparatus 100 for lean combustion engines.
[Figure 8] Figure 8 is a schematic sectional view showing a configuration of a modification of the selective reducing catalyst SCR_{L} (L1/L2 layered).
[Figure 9] Figure 9 is a schematic sectional view showing a configuration of a modification of the selective reducing catalyst SCR_{L} (L1/L2 layered).
[Figure 10] Figure 10 is a schematic sectional view showing a configuration of a modification of the selective reducing catalyst SCR_{L} (L1/L2 layered).

### [Description of Embodiment]

Hereinafter, an embodiment of the present invention will be described in detail with reference to the drawings. Relative positions such as the upper, the lower, the left and the right are based on the relative positions shown in the drawings unless otherwise specified. The dimensional ratios in the drawings are not limited to the ratios shown in the drawings. It is to be noted that the following embodiment is illustrative for explaining the present invention, and the present invention is not limited thereto. That is, the present invention can be carried out with any change made without departing from the spirit thereof. In the present description, for example, the representation of the numerical range of "1 to 100" includes both the upper limit value "100" and the lower limit value "1". The same applies to the representations of other numerical ranges. Further, in the present description, the term "D50 particle diameter" refers to a particle diameter at which the integrated value at smaller particle diameters reach 50% of the total in a cumulative distribution of particle diameters on a volume basis. The "D50 particle diameter" means a so-called median diameter, which is a value obtained by performing measurement with a laser diffraction particle diameter distribution measuring apparatus (e.g. Laser Diffraction Particle Diameter Distribution Measuring Apparatus SALD-3100 manufactured by Shimadzu Corporation). The BET specific surface area is a value determined by a BET one-point method using a specific surface area/pore distribution measuring apparatus (product name: BELSORP-miniII manufactured by MicrotracBell Corp.) and analysis software (product name: BEL_Master manufactured by MicrotracBell Corp.).

### (Embodiments)

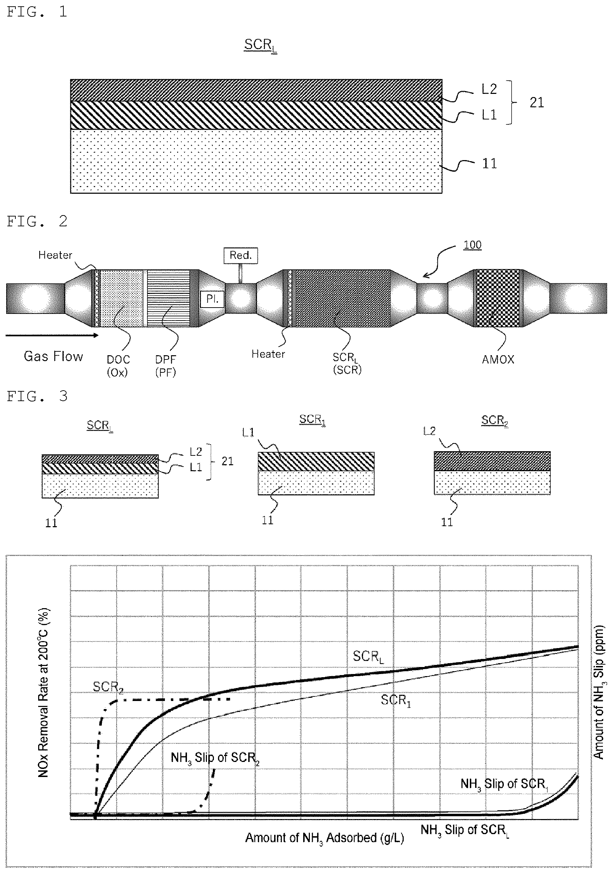

Figure 1 is a schematic sectional view showing a configuration of a selective reducing catalyst SCR_{L} (L1/L2 layered) according to the present embodiment. The selective reducing catalyst SCR_{L} is a catalyst which adsorbs ammonia and brings the ammonia into contact with NOₓ to perform reduction. The selective reducing catalyst SCR_{L} comprises a base material 11 and a layered catalyst 21 provided on the base material 11. The layered catalyst 21 comprises at least a first catalyst layer L1 containing at least zeolite and a transition metal element supported on the zeolite, and a second catalyst layer L2 containing at least an oxygen storage and release material and a transition metal element, and at least the first catalyst layer L1 and the second catalyst layer L2 are provided in this order on the base material 11.

Here, in the present description, the phrase "at least the first catalyst layer L1 and the second catalyst layer L2 are provided in this order on the base material 11" means that the base material 11, the first catalyst layer L1 and the second catalyst layer L2 are arranged in this order, and as long as these three layers are arranged in this order, any other layer (e.g. a primer layer, an adhesive layer or the like) may be interposed between these layers. That is, the layered structure of the selective reducing catalyst SCR_{L} (L1/L2 layered) may take any of a form in which the base material 11, the first catalyst layer L1 and the second catalyst layer L2 are directly placed (base material 11/first catalyst layer L1/second catalyst layer L2) and a form in which the base material 11, the first catalyst layer L1 and the second catalyst layer L2 are separately arranged with any other layer interposed therebetween (e.g. base material 11/other layer/first catalyst layer L1/second catalyst layer L2, base material 11/other layer/first catalyst layer L1/other layer/second catalyst layer L2 or base material 11/first catalyst layer L1/other layer/second catalyst layer L2).

Figure 2 is a schematic view showing a general configuration of an exhaust gas purification apparatus 100 for lean combustion engines according to the present embodiment. The exhaust gas purification apparatus 100 for lean combustion engines comprises at least: one or more oxidation catalysts Oₓ which are arranged in an exhaust gas flow channel and oxidize at least one selected from the group consisting of CO, HC, NO and NH₃ in an exhaust gas discharged from a lean combustion engine such as a diesel engine; a reducing agent supplying unit Red. for supplying one or more reducing agents selected from the group consisting of a urea component and an ammonia component into the exhaust gas flow channel; and one or more first selective reducing catalysts SCRs which adsorb ammonia and bring the ammonia into contact with NOₓ to perform reduction. In the present embodiment, the oxidation catalyst Oₓ which oxidizes CO, HC, NO, NH₃ and the like in the exhaust gas, a particulate filter (PF) for collecting particulate matters contained in the exhaust gas, a plasma generating apparatus Pl. for plasma-treating the exhaust gas, the reducing agent supplying unit Red. for supplying a urea component, an ammonia component and the like, the first selective reducing catalyst SCR_{L} which reduces NOₓ in the exhaust gas with ammonia as a reducing agent, and an ammonia oxidation catalyst (AMOX) which oxidizes and removes excess ammonia are provided in this order from the upstream side toward the downstream side of the exhaust gas flow channel.

The first selective reducing catalyst SCR_{L} used here comprises the layered catalyst 21 having a layered structure of the first catalyst layer L1 and the second catalyst layer L2. The first catalyst layer L1 contains at least zeolite and a transition metal element supported on the zeolite as catalyst materials (hereinafter, sometimes referred to as "zeolite-based catalyst materials"). The second catalyst layer L2 contains at least an oxygen storage and release material and a transition metal element as catalyst materials (hereinafter, sometimes referred to as "non-zeolite-based catalyst materials"). By using the layered catalyst 21 having a layered structure of the first catalyst layer L1 and the second catalyst layer L2 as described above, higher NOₓ removal performance can be exhibited than ever before under a condition of a relatively low to relatively high amount of ammonia adsorbed. The reason for this is not certain, and is thought to be as follows.

In the exhaust gas purification apparatus 100 for lean combustion engines according to the present embodiment, the selective reducing catalyst SCR_{L} (L1/L2 layered) using the layered catalyst 21 in which the second catalyst layer L2 containing a non-zeolite-based catalyst material is layered on the upper side of the first catalyst layer L1 containing a zeolite-based catalyst material is employed. As compared to zeolite-based catalyst materials used heretofore, the non-zeolite-based catalyst material allows the NOₓ removal reaction to proceed more easily even under a condition of a relatively low amount of NH₃ adsorbed because the adsorption point of NH₃ and the adsorption point of a transition metal such as W, Ce or Zr are close to each other. Therefore, when such a layered catalyst 21 is used, excellent NOₓ removal performance is exhibited even under a condition of a relatively low amount of ammonia adsorbed as compared to a case where a single-layer catalyst with a zeolite-based catalyst material is used. In other words, when such a layered catalyst is used, NOₓ removal performance quickly rises against injection of a reducing agent.

When the maximum amount of NH₃ adsorbed per unit volume is relatively small, and the second catalyst layer L2 with a relatively small NH₃ volume is used, saturated adsorption is reached in a relatively early stage in the second catalyst layer L2, and therefore the amount of NH₃ slip increases in a relatively early stage in the second catalyst layer L2. NH₃ slipped in the second catalyst layer L2 is adsorbed to the first catalyst layer L1 to increase the adsorption ratio of NH₃ in the first catalyst layer L1. Consequently, the NOₓ removal properties of the first catalyst layer L1, particularly high NOₓ removal performance of the first catalyst layer L1 when the amount of NH₃ supplied is relatively large can be sufficiently supplied. By employing a configuration in which occurrence of a relatively large amount of NH₃ slip is tolerated in the second catalyst layer L2 as mentioned above and a configuration in which the first catalyst layer L1 is provided on the lower stage of the second catalyst layer L2, the NOₓ removal properties of the second catalyst layer L2 and the NOₓ removal properties of the first catalyst layer L1 can be mutually complemented, and this ensures that high NOₓ removal performance is maintained under a wide range of conditions from a condition of a low amount of NH₃ supplied (e.g. under a condition of NH₃ adsorption at 0 to 40% of the saturated adsorption amount) to a condition of a high amount of NH₃ supplied (e.g. under a condition of NH₃ adsorption at 40 to 100% of the saturated adsorption amount). In the present description, the maximum amount of NH₃ adsorbed (saturated adsorption amount) per unit volume of the second catalyst layer L2 and the first catalyst layer L1 is the amount of NH₃ adsorbed at which the NH₃ concentration at a catalyst outlet reaches 5 ppm when the second catalyst layer L2 and the first catalyst layer L1 are each placed in a system that is an exhaust gas flow channel and a model gas containing a NH₃ gas at a predetermined concentration is supplied into the system from the upstream side toward the downstream side as described later.

The measurement conditions are as follows.
- Evaluation apparatus: (manufactured by MHI Solution Technologies Co., Ltd.)
- Quantitative analysis apparatus: FTIR FAST-1400 (manufactured by Iwata Dengyo Co., Ltd.)
- Catalyst size: φ25.4 mm × 20 mm 400 cells/4.5 mills
- Space velocity: 40000 tr1
- Total gas flow rate: 6.8 L/min
- Reaction temperature: 200°C
- Model gas composition: NO: 75 ppm, NO₂: 25 ppm, NH₃: 80 ppm, O₂: 6%, H₂O: 12%, N₂: balance

### (Operation Procedure)

- The gas concentrations of NH₃, NO, NO₂ and N₂O at the catalyst inlet and outlet are measured, and the performance of each catalyst (NOₓ removal rate and amount of NH₃ adsorbed) is evaluated. The operation procedure is as follows. A gas other than NH₃ was fed at a predetermined concentration in advance, and NH₃ gas was fed at a predetermined concentration. The amount of NH₃ adsorbed at which the NH₃ concentration at a catalyst outlet reached 5 ppm is taken as a saturated adsorption amount (maximum amount of NH₃ adsorbed), and the NOₓ removal rate at a saturated adsorption amount of 33% is calculated. The NOₓ removal rate and the amount of NH₃ adsorbed are calculated on the basis of the following calculation expressions. NOx removal rate (%) = {(NOx (= NO + NO2) concentration at inlet) - (NOx concentration at outlet)} / (NOx concentration at inlet) × 100 Amount of NH3 adsorbed (g/L) = {(amount of NH3 introduced (g)) - (amount of NH3 discharged (g)) - (amount of NH3 used for NOx removal (g))} / (catalyst volume)

Figure 3 is a conceptual diagram of catalyst performance of the selective reducing catalyst SCR_{L} (L1/L2 layered). Here, the selective reducing catalyst SCR_{L} (L1/L2 layered) of the present embodiment in which the layered catalyst 21 with the first catalyst layer L1 and the second catalyst layer L2 is provided is compared with the selective reducing catalyst SCR₁ (L1 single layer) in which a single-layer catalyst layer with only the first catalyst layer L1 is provided at the same coating mass as in the layered catalyst 21 and the selective reducing catalyst SCR₂ (L2 single layer) in which a single-layer catalyst layer with only the second catalyst layer L2 is provided at the same coating mass as in the layered catalyst 21.

Even when the amount of NH₃ supplied is relatively small (e.g. under a condition of NH₃ adsorption at 0 to 40% of the saturated adsorption amount), the exhaust gas purification apparatus 100 for lean combustion engines according to the present embodiment exhibits high NOₓ removal performance in a relatively early stage under a condition of a relatively small amount of NH₃ adsorbed because the second catalyst layer L2 easily reaches saturated adsorption of NH₃. Even when the amount of NH₃ supplied is relatively large (e.g. under a condition of NH₃ adsorption at 40 to 100% of the saturated adsorption amount), the exhaust gas purification apparatus 100 for lean combustion engines according to the present embodiment exhibits higher NOₓ removal performance because the second catalyst layer L2 tolerates occurrence of NH₃ slip in a relatively early stage to supply NH₃ to the first catalyst layer L1, so that the catalyst performances of both the second catalyst layer L2 and the first catalyst layer L1 function. That is, the second catalyst layer L2 also functions as, so to speak, a catalyst layer with high NH₃ slip properties, and derives higher NOₓ removal performance of the first catalyst layer L1 without excessively inhibiting an increase in the amount of NH₃ adsorbed in the first catalyst layer L1 on the lower stage. It is thought that as a result of these effects combined together, the selective reducing catalyst SCR_{L} and the exhaust gas purification apparatus 100 for lean combustion engines according to the present embodiment enables achievement of a NOₓ removal ratio higher by about 5 to 50% as compared to a case where a prior art selective reducing catalyst SCR₁ is used, even under a condition of a relatively low amount of NH₃ adsorbed or a condition of a relatively high amount of NH₃ adsorbed. It is to be noted that the effects are not limited thereto.

Moreover, among catalyst materials used as SCR catalysts, non-zeolite-based catalyst materials containing at least an oxygen storage and release material and a transition metal element are available at low cost in the market (e.g. about 1/3 to 1/2 as compared to zeolite-based catalyst materials in terms of cost per 1 kg). Thus, the amount of transition metal ion-exchange zeolite that is relatively expensive can be reduced as compared to prior arts, and this ensures that it is possible to realize a selective reducing catalyst SCR_{L} and an exhaust gas purification apparatus 100 for lean combustion engines, which is relatively inexpensive and has high performance.

Hereinafter, the constituent elements will be described in detail.

### [Oxidation Catalyst Oₓ]

The oxidation catalyst Oₓ is a catalyst which oxidizes CO, HC, NO, NH₃ and the like in the exhaust gas. In the present description, the oxidation catalyst Oₓ conceptually includes, in addition to the above-described DOC, a lean NOₓ storage catalyst (LNT, lean NOₓ trap) which stores NOₓ under a lean condition and releases NOₓ under a rich condition to oxidize CO and HC to CO₂ and H₂O and reduce NOₓ to N₂, and catalyst-coated PF (cPF) obtained by applying such a catalyst onto PF. As the oxidation catalyst Oₓ in the exhaust gas purification apparatus 100 for lean combustion engines, composite particles including base material particles of metal oxides such as alumina, zirconia and ceria and zeolite and platinum group metals (PGMs) as catalytically active components supported on such carriers are generally used. These are known in the art in a variety of kinds, and as the oxidation catalyst Oₓ, one of the various oxidation catalysts can be used, or two or more thereof can be appropriately combined and used in any combination.

As the oxidation catalyst Oₓ, catalysts are preferably used in which a catalyst layer including base material particles that are inorganic particulates and a platinum group element-supported catalyst material with a platinum group element supported on the base material particles is provided on an integral structure type catalyst carrier such as a honeycomb structure. By forming the oxidation catalyst Oₓ using such a platinum group element-supported catalyst material, high exhaust gas purification performance can be achieved while an increase in pressure loss is inhibited.

Here, as the inorganic particulates as base material particles supporting a platinum group element, an inorganic compound heretofore used in this type of exhaust gas purifying catalysts can be considered. Examples thereof include oxides such as zeolite, cerium oxide (ceria: CeO₂), oxygen storage and release materials (OSC) such as ceria-zirconia composite oxides (CZ composite oxides), aluminum oxides (alumina: Al₂O₃) such as γ-alumina, β-alumina, δ-alumina, η-alumina and θ-alumina, zirconium oxide (zirconia: ZrO₂), silicon oxide (silica: SiO₂) and titanium oxide (titania: TiO₂), and composite oxides containing any of these oxides as a main component, and the type thereof is not particularly limited. They may be composite oxides or solid solutions containing a rare earth element such as lanthanum or yttrium, a transition metal element or an alkaline earth metal. One of these inorganic particulates can be used, or two or more thereof can be used in any combination and ratio. The oxygen storage and release material means a material which stores or releases oxygen depending on an external environment.

The average particle diameter D₅₀ of the base material particles of the oxidation catalyst Oₓ can be appropriately set depending on desired performance, and is not particularly limited. From the viewpoint of maintaining a large specific surface area and enhancing heat resistance to increase the number of their own catalytically active sites, the average particle diameter D₅₀ of the base material particles is preferably 0.5 to 100 µm, more preferably 1 to 100 µm, still more preferably 1 to 50 µm. The BET specific surface area of the base material particles can be appropriately set depending on desired performance, and is not particularly limited, and from the viewpoint of maintaining a large specific surface area and enhancing catalytic activity, the BET specific surface area by the BET one-point method is preferably 10 to 500 m²/g, more preferably 20 to 300 m²/g, still more preferably 30 to 200 m²/g. As various materials to be used as the base material particles of the oxidation catalyst Oₓ, a large number of materials of various grades are commercially available from domestic and foreign manufacturers, and depending on required performance, commercial products of various grades can be used as the base material particles. The base material particles can also be produced by methods known in the art.

Examples of the platinum group element include platinum (Pt), palladium (Pd), rhodium (Rh), ruthenium (Ru), iridium (Ir) and osmium (Os). One of the platinum group elements can be used, or two or more thereof can be used in any combination and ratio. From the viewpoint of improving the exhaust gas purification performance, suppressing advancement of grain growth (sintering) of the platinum group element on the base material particles, etc., the content ratio of the platinum group element in the oxidation catalyst Oₓ (mass of the platinum group element per L of the integral structure type catalyst carrier) is, normally, preferably 0.1 to 20 g/L, more preferably 0.2 to 15 g/L, still more preferably 0.3 to 10 g/L.

The oxidation catalyst Oₓ may contain various other catalyst materials and co-catalyst known in the art and various additives. The oxidation catalyst Oₓ may contain binders such as a variety of sols such as, for example, boehmite, alumina sol, titania sol, silica sol and zirconia sol; and soluble salts such as aluminum nitrate, aluminum acetate, titanium nitrate, titanium acetate, zirconium nitrate and zirconium acetate. The oxidation catalyst Oₓ may further contain a Ba-containing compound in addition to the above-described components. By adding a Ba-containing compound, improvement of heat resistance, and activation of catalyst performance can be expected. Examples of the Ba-containing compound include, but are not particularly limited to, sulfates, carbonates, composite oxides and oxides. More specific examples thereof include BaO, Ba(CH₃COO)₂, BaO₂, BaSO₄, BaCO₃, BaZrOs and BaAl₂O₄. Further, the oxidation catalyst Oₓ may contain a dispersion stabilizer such as a nonionic surfactant or an anionic surfactant; a pH adjuster; a viscosity modifier; and the like.

As the integral structure type catalyst carrier supporting the oxidation catalyst Oₓ, honeycomb structures commonly used for automobile exhaust gas applications are preferably used. Examples of such honeycomb structures include ceramic monolith carriers such as cordierite, silicon carbide and silicon nitrite, metal honeycomb carriers made of stainless steel or the like, wire mesh carriers made of stainless steel or the like, and steel wool-shaped knitted wire carriers. The shape thereof is not particularly limited, and one having any shape such as, for example, a prismatic column shape, a cylindrical shape, a spherical shape, a honeycomb shape or a sheet shape can be selected. One of these honeycomb structures can be used, or two or more thereof can be appropriately combined and used. As the honeycomb structures for automobile exhaust gas applications, flow-through type structures in which gas flow channels communicate with one another, and wall flow type structures in which some of the end surfaces of the gas flow channels are closed and a gas can be fed through the wall surfaces of the gas flow channels are widely known, and both of these structures are applicable. When the wall flow type structure is used, the oxidation catalyst Oₓ is sometimes referred to as an oxidation catalyst OxoF (DOCoF in the case of DOC) for convenience hereinafter because it matches the catalyst-coated PF (catalyzed PF: cPF) or the catalyzed soot filter (catalyzed filter: CSF). On the other hand, when the flow-through type structure is used, the oxidation catalyst Oₓ is sometimes referred to simply as an oxidation catalyst DOC.

In the above-described oxidation catalyst Oₓ, the total coverage of the above-described catalyst layer is not particularly limited, and from the viewpoint of the balance between catalyst performance and pressure loss, etc., the total coverage per L of the integral structure type catalyst carrier is preferably 1 to 500 g/L, more preferably 2 to 450 g/L, still more preferably 2 to 80 g/L for the wall flow type catalyst carrier and 50 to 300 g/L for the flow-through type catalyst carrier.

The catalyst layer of the oxidation catalyst Oₓ can be used as a single layer, or can be used as a laminate with two or more layers depending on required performance. Further, the catalyst layer may be directly placed on the catalyst layer integral structure type catalyst carrier of the oxidation catalyst Oₓ, or may be provided on the integral structure type catalyst carrier with a binder layer, an underlayer or the like interposed therebetween. As the binder layer, the underlayer or the like, one known in the art can be used, and the type thereof is not particularly limited. It is possible to use oxides such as zeolite, cerium oxide (ceria: CeO₂), oxygen storage and release materials (OSC) such as ceria-zirconia composite oxides (CZ composite oxides), aluminum oxides (alumina: Al₂O₃) such as γ-alumina, β-alumina, δ-alumina, η-alumina and θ-alumina, zirconium oxide (zirconia: ZrO₂), silicon oxide (silica: SiO₂) and titanium oxide (titania: TiO₂), and composite oxides containing any of these oxides as a main component. The coating mass of the binder layer, the underlayer or the like is not particularly limited, and is preferably 1 to 150 g per L, more preferably 10 to 100 g per L of the integral structure type catalyst carrier.

The number of the oxidation catalyst Oₓ provided in the system of the exhaust gas flow channel of the exhaust gas purification apparatus 100 for lean combustion engines according to the present embodiment may be at least one, or may be two or more (e.g. two to five) depending on required performance etc. It is also possible to use a zone-coated oxidation catalyst zOₓ obtained by zone-coating one catalyst carrier with two oxidation catalyst materials. The zone-coating is not particularly limited as long as a surface of one catalyst carrier is segmented and covered with a plurality of catalyst layers, and it is known that catalyst layers are applied differently in a concentric fashion to a center part and an outer peripheral part with respect to a through-hole direction (axis line) of a catalyst carrier (honeycomb structure), or applied differently in a through-hole depth direction of a honeycomb structure. Here, the way in which the catalyst layers are applied differently in the zone-coating varies depending on the composition of harmful components to be removed, the flow rate, the temperature and the like, and an optimum combination is appropriately set. For example, for applying catalyst layers differently in a front stage and a rear stage in purification of an exhaust gas from an automobile, there are cases where a large number of types of catalyst components are applied on one side and a small number of types of catalyst components are applied on the other side, cases where a large amount of noble metal components are applied on one side and noble metal components are thinly applied on the other side, and the like. In zone-coating where a honeycomb structure is covered with catalyst components in multiple layers, there are cases where a lower layer is thickly applied and an upper layer is thinly applied on one side, and a lower layer is thinly applied and an upper layer is thickly applied on the other side. For the types of catalysts applied differently, the combination of an oxidation catalyst and a reducing catalyst is changed, and even for catalysts of the same type, the composition, the concentration of active species, the total coverage on a honeycomb structure, and the like may be changed. Hereinafter, for example, zDOC in which the initial character "z" is added means zone-coated DOC. When a plurality of oxidation catalysts Oₓ is provided, the oxidation catalysts Oₓ may be the same type of Oₓ, or different types of Oₓ. Examples of the sequence here include, but are not particularly limited to, DOC, DOCoF, LNT, DOC+DOC, zDOC+zDOC, DOC+LNT, zDOC+zLNT, DOC+DOCoF, zDOC+zDOC+DOC, DOC+zDOC+zDOC, DOC+LNT+DOCoF, zDOC+zLNT+DOCoF, DOC+DOCoF+DOC, DOC+DOCoF+LNT, LNT+LNT, LNT+LNT+DOCoF, LNT+DOCoF.

When a plurality of oxidation catalysts Oₓ is provided in the system of the exhaust gas flow channel of the exhaust gas purification apparatus 100 for lean combustion engines according to the present embodiment, the oxidation catalysts Oₓ may be arranged adjacently, or arranged separately in the exhaust gas flow channel with the first selective reducing catalyst SCR_{L}, the reducing agent supplying unit, the heating device, the plasma generating apparatus or the like interposed therebetween the oxidation catalysts Oₓ. Depending on desired performance, for example, the oxidation catalyst Oₓ can be arranged on the upstream side of the exhaust gas flow channel with respect to the first selective reducing catalyst SCR_{L}, or the oxidation catalyst Oₓ can be arranged on the downstream side of the exhaust gas flow channel with respect to the first selective catalyst SCR_{L}, and when a plurality of oxidation catalysts Oₓ is provided, these arrangement examples can be combined and applied.

### [Particulate Filter PF]

In the exhaust gas purification apparatus 100 for lean combustion engines according to the present embodiment, a particulate filter PF formed of the above-described wall flow type structure is provided on the downstream side of the above-described oxidation catalyst Oₓ. This particulate filter PF is aimed at trapping particulate components (PM) such as soot in the exhaust gas discharged from the lean combustion engine, and if necessary, spraying unburned light oil on a regular basis to combust or oxidize and remove the particulate components. As such particulate filters PF, diesel particulate filters DPF are widely known. As the particulate filter PF, a catalyst-coated wall flow type structure can also be used. In this case, the particulate filter PF functions as the above-described catalyst-coated PF (catalyzed PF: cPF) or catalyzed soot filter. Details thereof are as described above, and are therefore omitted here to avoid redundancy.

### [first Selective Reducing Catalyst SCR_{L}]

The first selective reducing catalyst SCR_{L} adsorbs ammonia stemming from a reducing agent supplied from a reducing agent supplying unit Red. (ammonia generated by thermal decomposition etc., of a urea component when the reducing agent is a urea component), and brings the ammonia into contact with NOₓ to perform purification by reduction. As described above, a layered structure comprising the layered catalyst 21 in which at least the first catalyst layer L1 and the second catalyst layer L2 are provided in this order on the base material 11 is used as the first selective reducing catalyst SCR_{L} according to the present embodiment.

### (First catalyst layer L1)

In the exhaust gas purification apparatus 100 for lean combustion engines and the layered catalyst 21 according to the present embodiment, the first catalyst layer L1 contains at least a zeolite-based catalyst material containing at least zeolite and a transition metal element supported on the zeolite.

As the zeolite contained in the first catalyst layer L1, various zeolites heretofore used in this type of exhaust gas purifying catalyst can be considered. The zeolite mentioned here includes crystal alumino silicate, and crystal metal aluminophosphates having micropores and having a layered structure similar to that of zeolite, such as crystal alumino phosphate (ALPO) and crystal silica-alumino phosphate (SAPO). Specific examples thereof include, but are not particularly limited to, those that are so called alumino-phosphate such as SAPO-34 and SAPO-18. Specific examples of the zeolite used here include, but are not particularly limited to, zeolites of Y type, A type, L type, beta type, mordenite type, ZSM-5 type, ferrierite type, mordenite type, CHA type, AEI type, AFX type, KFI type and SFW type, and crystal metal aluminophosphates such as SAPO and ALPO. One of these zeolites can be used, or two or more thereof can be used in any combination and ratio. The skeletal structures of zeolites are stored in a database by International Zeolite Association, hereinafter sometimes abbreviated as "IZA"), and zeolites specified in the IUPAC structure code (hereinafter, also referred to simply as the "structure code") can be used without particular limitation. Their structures can be identified by comparison with powder X-ray diffraction (hereinafter, referred to as "XRD") patterns described in Collection of simulated XRD powder patterns for zeolites, Fifth revised edition (2007) or XRD patterns described in Zeolite Framework Types of the IZA Structure Committee website: http://www.iza-structure.org/databases/. Of these, zeolites having heat resistance and various known skeletal structures can be used.

Of these zeolites, zeolites having an oxygen six-membered ring structure, an oxygen double six-membered ring structure, an oxygen eight-membered ring structure and/or an oxygen twelve-membered ring structure are preferable, zeolites having an oxygen six-membered ring structure, an oxygen double six-membered ring structure or an oxygen eight-membered ring structure are more preferable, and zeolites having an oxygen six-membered ring structure or an oxygen double six-membered ring structure are still more preferable. Specifically, zeolites having one or more skeletal structures selected from the group consisting of CHA, AEI, AFX, KFI, SFW, MFI and BEA are more preferable, and zeolites having one or more skeletal structures selected from the group consisting of CHA, AEI, AFX, KFI and SFW are still more preferable. In zeolite, the number of acid points varies depending on a Si/Al ratio. In general, zeolite having a low Si/Al ratio has a large number of acid points, but is degraded to a large extent in the context of durability in coexistence of water vapor, whereas zeolite having a high Si/Al ratio is excellent in heat resistance, but tends to have a small number of acid points. From such a viewpoint, the Si/Al ratio of zeolite used is preferably 1 to 500, more preferably 1 to 100, still more preferably 1 to 50.

The average particle diameter D₅₀ of the zeolite in the first catalyst layer L1 can be appropriately set according to desired performance, and is not particularly limited. From the viewpoint of maintaining a large specific surface area and enhancing heat resistance to increase the number of its own catalytically active sites, the average particle diameter D₅₀ of the zeolite is preferably 0.5 to 100 µm, more preferably 0.5 to 50 µm, still more preferably 0.5 to 30 µm. The BET specific surface area of the zeolite is not particularly limited, and can be appropriately set depending on desired performance. From the viewpoint of maintaining a large specific surface area and enhancing catalytic activity, the BET specific surface area by the BET one-point method is preferably 10 to 1000 m²/g, more preferably 50 to 1000 m²/g, still more preferably 100 to 1000 m²/g. As the zeolite, a large number of zeolites of various grades are commercially available from domestic and foreign manufacturers, and depending on required performance, commercial products of various grades can be used as the oxygen storage and release material. The zeolite can also be produced by methods known in the art.

The transition metal element contained in the first catalyst layer L1 and supported on the zeolite is one or more selected from the group consisting of Cu, Fe, Ce, Mn, Ni, Co, Ca, Ag, Rh, Ru, Pd, Pt, Ir and Re. Of these, nickel, cobalt, copper, iron and manganese are preferable, and copper and iron are more preferable. The transition metal element may be dispersively held in the first catalyst layer L1, and is preferably supported on the surface of the above-described zeolite. One of the transition metal elements can be used, or two or more thereof can be used in any combination and ratio. In general, as solid acid points, cations are present as counter ions in zeolite, and the cation is generally an ammonium ion or a proton. In the present embodiment, it is preferable to use zeolite as transition metal element ion-exchange zeolite in which cation sites of the zeolite are ion-exchanged with any of these transition metal elements. The ion-exchange rate of the zeolite is not particularly limited, and is preferably 1 to 100%, more preferably 10 to 95%, still more preferably 30 to 90%. An ion-exchange rate of 100% means that all of cationic species in the zeolite are ion-exchanged with transition metal element ions. The amount of Cu or Fe added with respect to the zeolite is preferably 0.1 to 10 wt%, more preferably 1 to 10 wt%, still more preferably 2 to 8 wt%, in terms of oxide (CuO or Fe₂O₃). All of the transition metal elements added as ion-exchange species may be ion-exchanged, or some of the transition metal elements may be present in the form of an oxide such as copper oxide or iron oxide.

As the first catalyst layer L1, one obtained by coating the base material 11 (e.g. an integral structure type catalyst carrier such as a honeycomb structure) with a catalyst material containing ion-exchange zeolite ion-exchanged with at least one transition metal element selected from the group consisting of nickel, cobalt, copper, iron and manganese is preferably used. Of these, Cu ion-exchange zeolite and Fe ion-exchange zeolite are particularly preferably used. A configuration in which a SCR layer containing a zeolite-based catalyst material as mentioned above is provided on the catalyst carrier enables achievement of high exhaust gas purification performance while inhibiting an increase in pressure loss.

Here, the first catalyst layer L1 may contain any of the above-described oxygen storage and release materials such as ceria-based oxides and ceria-zirconia-based composite oxides and other base material particles as long as the effects of the present invention are not excessively inhibited. Examples of other base material particles include inorganic compounds known in the art, for example, oxides such as aluminum oxides (alumina: Al₂O₃) such as γ-alumina, β-alumina, δ-alumina, η-alumina and θ-alumina, zirconium oxide (zirconia: ZrO₂), silicon oxide (silica: SiO₂) and titanium oxide (titania: TiO₂), and composite oxides containing any of these oxides as a main component, and the type thereof is not particularly limited. They may be composite oxides or solid solutions containing a rare earth element such as lanthanum or yttrium, a transition metal element or an alkaline earth metal. One type of these oxygen storage and release materials and other base material particles can be used, or two or more thereof can be used in any combination and ratio.

The first catalyst layer L1 may contain various catalyst materials and co-catalyst known in the art, and various additives. Or, the first catalyst layer L1 may contain binders such as a variety of sols such as, for example, boehmite, alumina sol, titania sol, silica sol and zirconia sol; and soluble salts such as aluminum nitrate, aluminum acetate, titanium nitrate, titanium acetate, zirconium nitrate and zirconium acetate. The first catalyst layer L1 may further contain a Ba-containing compound in addition to the components described above. Further, the first catalyst layer L1 may contain a dispersion stabilizer such as a nonionic surfactant or an anionic surfactant; a pH adjuster; a viscosity modifier; and the like.

Further, the first catalyst layer L1 may contain a non-zeolite-based catalyst material such as a transition metal element-supported ceria-based oxide and/or a ceria-zirconia-based composite oxide as long as the effects of the present invention are not excessively inhibited. When the first catalyst layer L1 contains a non-zeolite-based catalyst material, the content thereof is preferably 0.1 to 300 g/L, more preferably 1 to 200 g/L, still more preferably 5 to 100 g/L. The first catalyst layer L1 may contain an alkaline earth metal element such as Ca or Mg, or a platinum group element such as a rhodium (Rh), ruthenium (Ru), palladium (Pd), platinum (Pt) or iridium (Ir), or a noble metal element such as gold (Au) or silver (Ag). One of the platinum group elements and noble metal elements can be used, or two or more thereof can be used in any combination and ratio. It is to be noted that preferably, the first catalyst layer L1 is substantially free of the platinum group element or the noble metal element because it oxidizes an ammonia component to generate NOₓ. From such a viewpoint, the content of the platinum group element in the first catalyst layer L1 is preferably less than 3 g/L, more preferably less than 1 g/L, still more preferably less than 0.5 g/L.

### (Second catalyst layer L2)

In the exhaust gas purification apparatus 100 for lean combustion engines and the layered catalyst 21 according to the present embodiment, the second catalyst layer L2 contains at least a non-zeolite-based catalyst material containing an oxygen storage and release material and a transition metal element.

As the oxygen storage and release material contained in the second catalyst layer L2, inorganic compounds heretofore used in this type of exhaust gas purifying catalyst can be considered. Specifically, ceria-based oxides and ceria-zirconia-based composite oxides having not only an excellent oxygen storage capacity but also relatively excellent heat resistance are preferably used as oxygen storage and release materials.

Examples of the ceria-based oxide include, but are not particularly limited to, cerium oxide (IV), composite oxides of cerium and rare earth elements other than cerium (note that zirconium is excluded; those containing zirconium correspond to ceria-zirconia-based composite oxides), cerium-transition element composite oxides, composite oxides of cerium, rare earth elements other than cerium (note that zirconium is excluded; in the present description, those containing zirconium correspond to ceria-zirconia-based composite oxides) and transition elements, cerium-silicon composite oxides, cerium-transition element-silicon composite oxides, and composite oxides of cerium, rare earth elements other than cerium, transition elements and silicon. Examples of the ceria-zirconia-based composite oxide include, but are not particularly limited to, cerium-zirconium, cerium-zirconium-transition element composite oxides, and composite oxides of cerium, zirconium and rare earth elements other than cerium and zirconium. Examples of the other rare earth elements include scandium, yttrium, lanthanum, praseodymium, neodymium, promethium, samarium, europium, gadolinium, terbium, dysprosium, holmium, erbium, thulium, ytterbium and lutetium. Examples of the transition metal include, but are not particularly limited to, chromium, cobalt, iron, nickel, titanium, manganese and copper. For example, a part of cerium or zirconium may be substituted with an alkali metal element, an alkaline earth metal element or the like. One of these oxygen storage and release materials can be used, or two or more thereof can be used in any combination and ratio.

The average particle diameter D₅₀ of the oxygen storage and release material in the second catalyst layer L2 can be appropriately set according to desired performance, and is not particularly limited. From the viewpoint of maintaining a large specific surface area and enhancing heat resistance to increase the number of its own catalytically active sites, the average particle diameter D₅₀ of the oxygen storage and release material is preferably 0.5 to 100 µm, more preferably 1 to 100 µm, still more preferably 1 to 50 µm. The BET specific surface area of the oxygen storage and release material can be appropriately set depending on desired performance, and is not particularly limited, and from the viewpoint of maintaining a large specific surface area and enhancing catalytic activity, the BET specific surface area by the BET one-point method is preferably 10 to 250 m²/g, more preferably 20 to 200 m²/g, still more preferably 30 to 200 m²/g. As various materials to be used as the oxygen storage and release material in the second catalyst layer L2, a large number of materials of various grades are commercially available from domestic and foreign manufacturers, and depending on required performance, commercial products of various grades can be used as the oxygen storage and release material. The oxygen storage and release material can also be produced by methods known in the art.

The transition metal element contained in the second catalyst layer L2 is at least one of tungsten (W), niobium (Nb) and titanium (Ti). One of these transition metal elements can be used, or two or more thereof can be used in any combination and ratio. Here, the transition metal element may be dispersively held in the second catalyst layer L2, and is supported on the surface of the above-described oxygen storage and release material. From the viewpoint of improving exhaust gas purification performance, etc., the content ratio of the transition metal element (mass of the transition metal element per L of the integral structure type catalyst carrier) is normally, preferably 0.1 to 400 g/L, more preferably 1 to 300 g/L, still more preferably 5 to 200 g/L in terms of oxide of the transition metal element.

As the second catalyst layer L2, one obtained by coating the base material 11 (e.g. an integral structure type catalyst carrier such as a honeycomb structure) with a catalyst material containing a transition metal element-supported ceria-based oxide and/or ceria-zirconia-based composite oxide containing at least a ceria-based oxide and/or a ceria-zirconia-based composite oxide and a transition metal element such as W, Nb or Ti supported on the surface thereof is preferably used. Of these, W-supported ceria-based oxides, Nb-supported ceria-based oxides, Ti-supported ceria-based oxides, W-supported ceria-zirconia-based composite oxides, Nb-supported ceria-zirconia-based composite oxides, Ti-supported ceria-zirconia-based composite oxides and the like are particularly preferably used. Such a configuration in which a SCR layer containing a non-zeolite-based catalyst material is provided on a catalyst carrier enables achievement of high exhaust gas purification performance while inhibiting an increase in pressure loss.

Here, the second catalyst layer L2 may contain, in addition to the above-described oxygen storage and release material, other base material particles. Examples of such base material particles include particles of inorganic compounds known in the art, for example, oxides such as aluminum oxides (alumina: Al₂O₃) such as γ-alumina, β-alumina, δ-alumina, η-alumina and θ-alumina, zirconium oxide (zirconia: ZrO₂), silicon oxide (silica: SiO₂) and titanium oxide (titania: TiO₂), and composite oxides containing any of these oxides as a main component, and the type thereof is not particularly limited. They may be composite oxides or solid solutions containing a rare earth element such as lanthanum or yttrium, a transition metal element or an alkaline earth metal. One type of these base material particles of inorganic compounds can be used, or two or more types thereof can be used in any combination and ratio.

The second catalyst layer L2 may contain various catalyst materials and co-catalyst known in the art, and various additives. The second catalyst layer L2 may contain binders such as a variety of sols such as, for example, boehmite, alumina sol, titania sol, silica sol and zirconia sol; and soluble salts such as aluminum nitrate, aluminum acetate, titanium nitrate, titanium acetate, zirconium nitrate and zirconium acetate. The second catalyst layer L2 may further contain a Ba-containing compound in addition to the above-described components. Further, the second catalyst layer L2 may contain a dispersion stabilizer such as a nonionic surfactant or an anionic surfactant; a pH adjuster; a viscosity modifier; and the like.

Further, the second catalyst layer L2 may contain a zeolite-based catalyst material such as zeolite or transition metal element-supported zeolite (e.g. Cu-supported zeolite, Fe-supported zeolite or Cu/Fe-supported zeolite) as long as the effects of the present invention are not excessively inhibited. When the second catalyst layer L2 contains a zeolite-based catalyst material, the content thereof is preferably 0.1 to 300 g/L, more preferably 1 to 200 g/L, still more preferably 5 to 100 g/L. The second catalyst layer L2 may contain a platinum group element such as rhodium (Rh), ruthenium (Ru), palladium (Pd), platinum (Pt) or iridium (Ir) or a noble metal element such as gold (Au) or silver (Ag) as a catalytically active component. One of the platinum group elements or the noble metal elements can be used, or two or more thereof can be used in any combination and ratio. It is to be noted that preferably, the second catalyst layer L2 is substantially free of the platinum group element or the noble metal element because it oxidizes an ammonia component to generate NOₓ. From such a viewpoint, the content of the platinum group element in the second catalyst layer L2 is preferably less than 3 g/L, more preferably less than 1 g/L, still more preferably less than 0.5 g/L.

As the base material 11 supporting the first catalyst layer L1 and the second catalyst layer L2, for example, integral structure type catalyst carriers (specifically honeycomb structures) commonly used for automobile exhaust gas applications are preferably used. Specific examples of the base material 11 are as described in the paragraph of [Oxidation Catalyst Oₓ], and are omitted here to avoid redundancy. As the base material 11, both of a flow-through type structure and a wall flow type structure are applicable. Here, when the wall flow type structure is used, the base material is sometimes referred to as SCR_{L}OF or SCRoF or the like for convenience hereinafter because it matches the catalyst-coated SCR (catalyzed PF: cPF). On the other hand, when the flow-through type structure is used, the base material is sometimes referred to simply as SCR_{L} or SCR or the like.

The total coverage of the catalyst material in the first catalyst layer L1 is not particularly limited, and from the viewpoint of the balance between catalyst performance and pressure loss, etc., the total coverage per L of the integral structure type catalyst carrier is preferably 10 to 500 g/L, more preferably 20 to 400 g/L, still more preferably 30 to 300 g/L.

The total coverage of the catalyst material in the second catalyst layer L2 is not particularly limited, and from the viewpoint of the balance between catalyst performance and pressure loss, etc., the total coverage per L of the integral structure type catalyst carrier is preferably 10 to 500 g/L, more preferably 20 to 400 g/L, still more preferably 30 to 300 g/L.

The first catalyst layer L1 may be directly placed on the integral structure type catalyst carrier, or may be provided on the integral structure type catalyst carrier with a binder layer, an underlayer or the like interposed therebetween. The second catalyst layer L2 may be directly placed on the first catalyst layer L1, or may be provided on the first catalyst layer L1 with a binder layer, an underlayer or the like interposed therebetween. As these binder layer, the underlayer or the like, one known in the art can be used, and the type thereof is not particularly limited. It is possible to use, for example, oxides such as zeolite, cerium oxide (ceria: CeO₂), oxygen storage and release materials (OSC) such as ceria-zirconia composite oxides (CZ composite oxides), aluminum oxides (alumina: Al₂O₃) such as **γ-**alumina, **β**-alumina, **δ**-alumina, **η**-alumina and **θ**-alumina, zirconium oxide (zirconia: ZrO₂) , silicon oxide (silica: SiO₂) and titanium oxide (titania: TiO₂), and composite oxides containing any of these oxides as a main component. The coating mass of the binder layer, the underlayer or the like is not particularly limited, and is preferably 1 to 150 g, more preferably 10 to 100 g per L of the integral structure type catalyst carrier.

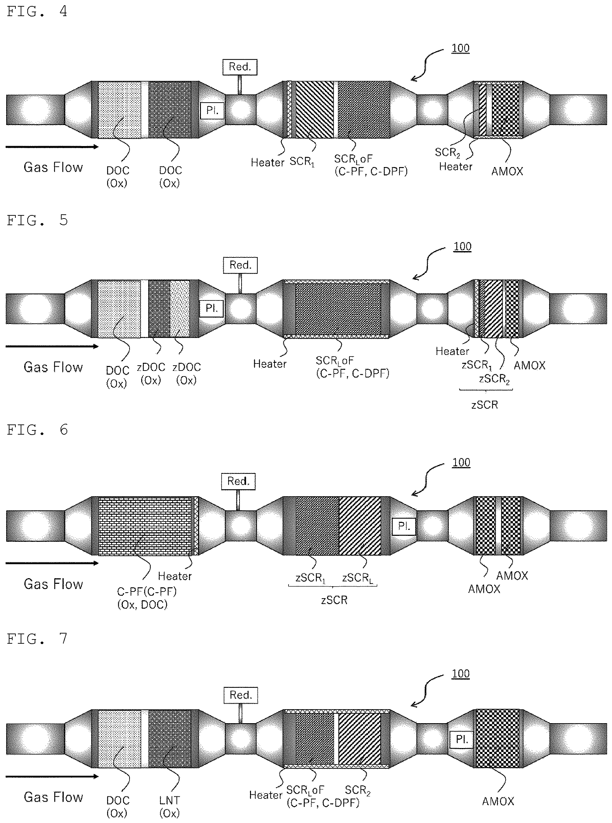

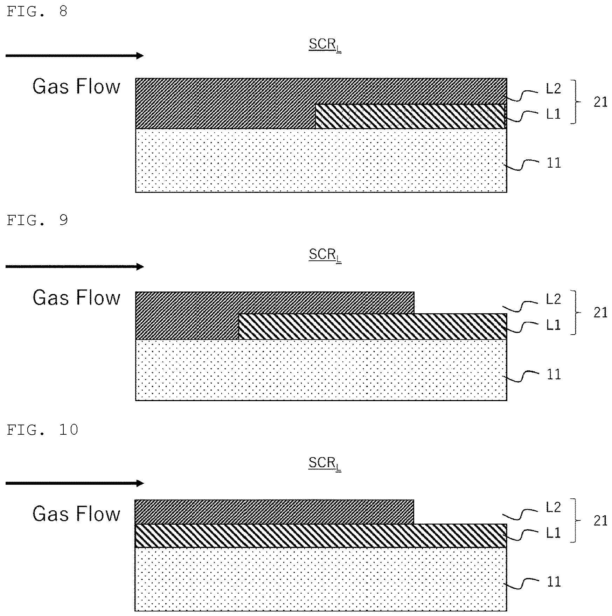

The number of the first selective reducing catalysts SCR_{L}s provided in the system of the exhaust gas flow channel of the exhaust gas purification apparatus 100 for lean combustion engines according to the present embodiment may be 1 or more, or may be 2 or more (e.g. 2 to 5) depending on required performance. When a plurality of first selective reducing catalysts SCR_{L}s is provided, the catalyst materials of these catalysts may be the same or different. For example, as shown in Figures 4 to 7, SCR other than the first selective reducing catalyst SCR_{L}, which is known in the art, can also be separately provided in the exhaust gas flow channel. Further, for example, as shown in Figures 8 to 10, the first selective reducing catalyst SCR_{L} can also be used as zone-coated SCR_{L} (zSCR_{L}) by zone-coating one catalyst carrier with catalyst materials to form the first catalyst layer L1 and the second catalyst layer L2 in succession. Here, the first catalyst layer L1 and the second catalyst layer L2 may completely or only partially overlap each other. From the viewpoint of ensuring that the second catalyst layer L2 functions as a catalyst layer having high responsiveness to the amount of a reducing agent adsorbed, and high NH₃ slip properties, it is preferable that the second catalyst layer L2 be provided on the base material 11 on the upstream side of the exhaust gas flow channel (on the left side in the figure), or provided on the base material 11 on the upstream side of the exhaust gas flow channel (on the left side in the figure) and on the first catalyst layer L1.

The volumes (sizes) of the first catalyst layer L1 and the second catalyst layer L2, the coating mass of catalyst materials for these catalyst regions, and the like are not particularly limited, and can be adjusted with consideration given to the type, the displacement and the like of an engine to which the exhaust gas purification apparatus 100 for lean combustion engines according to the present embodiment is applied, and depending on the required catalyst amount, purification performance and the like. Diesel engines range from those for compact cars with a displacement of about 1 L to those for heavy machines (heavy duties) with a displacement of more than 50 L, and NOₓ in the exhaust gas discharged from those diesel engines considerably varies depending on the operation state of the diesel engine, the method for control of combustion, and the like. The SCR catalyst used for purifying NOₓ in the exhaust gas discharged from these diesel engines can be selected in accordance with a diversity of diesel engine displacements ranging from about 1 L to more than 50 L. For example, adjustment can be appropriately made by increasing or decreasing the diameter and the length of a honeycomb structure used, the types and the combination ratios of catalyst materials used, the coating lengths of the first catalyst layer L1 and the second catalyst layer L2, the coating mass of catalyst materials, and the like.

### [Reducing Agent Supplying Unit Red.]

In the exhaust gas purification apparatus 100 for lean combustion engines according to the present embodiment, the reducing agent supplying unit Red. supplies one or more reducing agents selected from a urea component and an ammonia component into the exhaust gas flow channel. As the reducing agent supplying unit Red., one known in the art can be used, and the type thereof is not particularly limited. Normally, one composed of a reducing agent storage tank, a pipe connected to the tank, and a spray nozzle mounted at the tip of the pipe is used (not shown).

The spray nozzle of the reducing agent supplying unit Red. is placed on the upstream side of the first selective reducing catalyst SCR_{L}. In particular, in the first selective reducing catalyst SCR_{L} according to the present embodiment, the layered catalyst 21 is employed, and therefore it is preferable that the spray nozzle of the reducing agent supplying unit Red. be placed immediately before the upstream side of the first selective reducing catalyst SCR_{L} for sufficiently exhibiting the functions of the layered catalyst 21 by eliminating other factors. When a plurality of first selective reducing catalysts SCR_{L}s or other SCRs are used in combination, spray nozzles of the reducing agent supplying unit Red. may be provided at a plurality of points in the case where these catalysts are arranged separately.

The reducing component is selected from a urea component and an ammonia component. As the urea component, a standardized aqueous urea solution at a concentration of 31.8 to 33.3 wt%, such as, for example, Adblue (product name) can be used. As the ammonia component, aqueous ammonia as well as ammonia gas or the like can be used. Since NH₃ which is a reducing component itself has harmful properties such as an irritating odor, a method is preferable in which rather than directly using NH₃ as a reducing component, aqueous urea is added from the upstream side of the first selective reducing catalyst SCR_{L} to generate NH₃ through thermal decomposition or hydrolysis, and the NH₃ is applied as the reducing agent.

### [Heating Device (Heater)]

In the exhaust gas purification apparatus 100 for lean combustion engines according to the present embodiment, an electric heating device (Heater) (catalyst heating device) is provided in the exhaust gas flow channel on the downstream side of the spray nozzle of the reducing agent supplying unit Red. and on the upstream side of the first selective reducing catalyst SCR_{L}. The heating device is electrically connected to ECU and an on-vehicle power supply (not shown), and by controlling the power outputs of the ECU and the power supply, the temperature of the heating device (Heater), and hence the temperature of the exhaust gas in the exhaust gas flow channel can be controlled. One or more reducing agents selected from the group consisting of a urea component and an ammonia component and supplied from the reducing agent supplying unit Red. are heated with the heating device (Heater) in the exhaust gas flow channel to turn into NH₃ through thermal decomposition or hydrolysis, and adsorbed to the first selective reducing catalyst SCR_{L} on the downstream side of the exhaust gas flow channel. The reactivity of urea in the hydrolysis reaction can vary depending on the concentration, the combination composition, the pH and the like of aqueous urea, and can be efficiently controlled by controlling the temperature of the exhaust gas in the exhaust gas flow channel. In the exhaust gas flow channel, temperature sensors, NOₓ sensors and the like electrically connected to ECU are provided at various points, so that the NOₓ concentration and the exhaust gas temperature are monitored as needed.

In the present embodiment, the heating device (Heater) is composed of a metal honeycomb, a jacket type electric heating device mounted on the outer peripheral of the metal honeycomb, and a coil type electric heating device mounted so as to be partially embedded in the metal honeycomb main body (not shown). This metal honeycomb can be electrically heated by control of the control unit ECU, and by heat generation from the metal honeycomb, the temperature of the exhaust gas passing through the exhaust gas flow channel can be controlled. In the present embodiment, a heat insulating material is provided on the outer periphery of an exhaust channel 51 over the entire length (not shown). The heat insulating material is not particularly limited, and can be appropriately selected from those known in the art, and for example, one obtained using cellulose fibers, rock wool or the like is suitably used. The heating device (Heater) used here may be, for example, a jacket type electric heating device or an electrically heated catalyst (EHC) with a SCR catalyst supported on the metal honeycomb main body. Heating of the metal honeycomb can also be performed by causing the metal honeycomb itself to generate heat directly with an electric current passing through the metal honeycomb main body. In this case, by connecting the metal honeycomb to an on-vehicle power supply and controlling the power output of the power supply by the control unit ECU, the temperature of the metal honeycomb, and hence the temperature of the exhaust gas in the exhaust flow channel can be controlled.

### [Ammonia Oxidation Catalyst AMOX]

In the exhaust gas purification apparatus 100 for lean combustion engines according to the present embodiment, an ammonia oxidation catalyst AMOX which oxidizes and removes excess ammonia is provided on the downstream side of the first selective reducing catalyst SCR_{L}. As the ammonia oxidation catalyst AMOX, one known in the art can be used, and the type thereof is not particularly limited.

Normally, in a urea SCR system, the ammonia oxidation catalyst AMOX is additionally used if NOₓ or NH₃ cannot be purified to a regulatory value or a smaller value. Therefore, the ammonia oxidation catalyst AMOX includes a catalyst having a function of oxidizing NH₃, and a catalyst component having a function of purifying NOₓ. The catalyst having a function of oxidizing NH₃ is preferably one in which one or more elements selected from platinum, palladium, rhodium and the like are supported on an inorganic material composed of one or more selected from alumina, silica, titania, zirconia and the like. It is also preferable to use an inorganic material whose heat resistance is improved by adding a co-catalyst such as a rare earth, an alkali metal or an alkaline earth metal. Platinum and palladium as noble metals exhibit excellent oxidative activity. When the noble metal is supported on the inorganic material having a high specific surface area and high heat resistance, the noble metal component is hardly sintered, and thus the specific surface area of the noble metal is kept high to increase the number of active sites, so that high activity can be exhibited. On the other hand, as the catalyst having a function of purifying NOₓ, all of the non-zeolite-based catalyst materials and the zeolite-based catalyst materials described in the paragraph of "first selective reducing catalyst SCR_{L}" can be used. The two types of catalysts may be uniformly mixed and applied to a honeycomb structure of integral type, but may be applied such that a catalyst having a function of oxidizing NH₃ forms a lower layer and a catalyst having a function of purifying NOₓ forms an upper layer. The volumes (sizes) of the ammonia oxidation catalyst AMOX, the coating mass of catalyst material, and the like are not particularly limited, and can be adjusted with consideration given to the type, the displacement and the like of an engine to which the exhaust gas purification apparatus 100 for lean combustion engines according to the present embodiment is applied, and depending on the required catalyst amount, purification performance and the like.

Two or more (two to five) ammonia oxidation catalysts AMOX described above may be provided depending on required performance or the like. The ammonia oxidation catalyst AMOX can also be used as zone-coated AMOX (zAMOX) by zone-coating one catalyst carrier with two catalyst materials. When a plurality of ammonia oxidation catalysts AMOX is provided, the arrangement state of the ammonia oxidation catalysts AMOX is not particularly limited. That is, a plurality of ammonia oxidation catalysts AMOX may be arranged adjacently or arranged separately. From the viewpoint of oxidizing and removing excess ammonia, it is preferable that at least one of a plurality of ammonia oxidation catalysts AMOX be provided on the downstream side of the first selective reducing catalyst SCR_{L}, and more preferably provided at the most downstream in the exhaust gas flow channel preferably containing the oxidation catalyst Ox and the first selective reducing catalyst SCR_{L}.

### [Plasma Generating Apparatus Pl.]

In the exhaust gas purification apparatus 100 for lean combustion engines according to the present embodiment, a plasma generating apparatus Pl. for plasma-treating an exhaust gas is provided on the downstream side of the oxidation catalyst Oₓ and on the upstream side on the first selective reducing catalyst SCR_{L}. This plasma generating apparatus Pl. is a so-called atmospheric pressure plasma generating apparatus (plasma reactor) which generates a low-temperature plasma obtained by discharge in the atmosphere or the like and having low electronic energy. As the plasma generating apparatus Pl., one known in the art can be used, and the type thereof is not particularly limited. The exhaust gas passing through the exhaust gas flow channel is treated with a plasma generated by this plasma generating apparatus Pl., so that the NOₓ concentration further decreases (so-called plasma assisted SCR).

The exhaust gas purification apparatus 100 for lean combustion engines according to the present embodiment can be used as an apparatus for purifying an exhaust gas generated from an internal-combustion engine such as a diesel engine equipped with a urea SCR system, and is useful as an exhaust gas purifying catalyst for internal-combustion engines such as diesel engines, particularly an exhaust gas purification apparatus for diesel automobiles.

### (Modification)

The exhaust gas purification apparatus 100 for lean combustion engines according to the present embodiment can be arranged in the exhaust systems of various lean combustion engines. As described above, the numbers and the locations of oxidation catalysts Oₓ, reducing agent supplying unit Red., first selective reducing catalyst SCR_{L}, particulate filters PF, other selective reducing catalysts SCRs, plasma generating apparatuses Pl., reducing agent supplying unit Red., ammonia oxidation catalysts AMOX and the like placed, and the arrangements thereof are not limited to those in the present embodiment, can be appropriately adjusted according to the exhaust gas regulation, the type and the displacement of lean combustion engines applied, the required catalyst amount and purification performance, and the like, and are not particularly limited. For example, the placement location can be appropriately selected from a plurality of locations such as positions immediately below the exhaust system and positions below the floor behind the exhaust system.

For examples, as shown in Figures 4 to 7, the present embodiment can be implemented in any of layouts in which a plurality of SCR_{L}s is placed, a plurality of DOCs is placed, zSCR_{Lo}F obtained by zone-coating of the first catalyst layer L1 and the second catalyst layer L2 is placed, SCR and SCR_{L} are used in combination with zSCR_{Lo}F, zDOC obtained by zone-coating of the oxidation catalyst Oₓ is placed, zDOC is used in combination with DOC, zSCRₒF is used in combination with zSCR, cPF is placed, cPF is placed, zSCR is placed, a plurality of AMOXs is placed, DOC-LNT is placed, cPF is placed, etc.

### [Industrial Applicability]

The exhaust gas purification apparatus for lean combustion engines and the first selective reducing catalyst according to the present invention involves relatively low cost per unit catalyst coating mass, and can exhibit excellent NOₓ removal performance under a condition of a relatively low to relatively high amount of ammonia adsorbed. Therefore, the exhaust gas purification apparatus for lean combustion engines according to the present invention can be widely and effectively utilized as an exhaust gas purification apparatus for lean combustion internal engines, and is particularly useful as an exhaust gas purification apparatus for lean burn gasoline cars and diesel cars.

### [Reference Signs List]

100 Exhaust gas purification apparatus for lean combustion engines
11 Base material
21 Layered catalyst
L1 First catalyst layer
L2 Second catalyst layer
Ox Oxidation catalyst
DOC Oxidation catalyst (Diesel oxidation catalyst)
LNT Oxidation catalyst (NOx storage catalyst)
PF Particulate filter (Diesel particulate filter DOC)
Red. Reducing agent supplying unit
SCR Selective reducing catalyst
SCR_{L} Selective reducing catalyst (L1/L2 layered)
SCR₁ Selective reducing catalyst (L1 single layer)
SCR₂ Selective reducing catalyst (L2 single layer)
AMOX Ammonia oxidation catalyst
Heater Heating device
Pl. Plasma generating apparatus

## Claims

1. An exhaust gas purification apparatus (100) for lean combustion engines, comprising at least:
one or more oxidation catalysts (Ox) which are arranged in an exhaust gas flow channel and oxidize at least one selected from the group consisting of CO, HC, NO and NH₃ in an exhaust gas discharged from a lean combustion engine; a reducing agent supplying unit (Red.) for supplying one or more reducing agents selected from the group consisting of a urea component and an ammonia component into the exhaust gas flow channel; and one or more first selective reducing catalysts (SCR_{L}) arranged on the downstream side of the exhaust gas flow channel with respect to the reducing agent supplying unit (Red.) and which adsorb ammonia and bring the ammonia into contact with NOₓ to perform reduction, wherein
the first selective reducing catalyst (SCR_{L}) comprises a first base material (11) and a layered catalyst (21) provided on the first base material (11), and
the layered catalyst (21) comprises at least a first catalyst layer (L1) containing at least zeolite and a transition metal element supported on the zeolite, and a second catalyst layer (L2) containing at least an oxygen storage and release material and a transition metal element, and at least the first catalyst layer (L1) and the second catalyst layer (L2) are provided in this order on the first base material (11),
the first catalyst layer (L1) contains at least the zeolite and one or more selected from the group consisting of Cu, Fe, Ce, Mn, Ni, Co, Ca, Ag, Rh, Ru, Pd, Pt, Ir and Re supported on the zeolite, **characterized in that**
the second catalyst layer (L2) contains at least the oxygen storage and release material and one or more transition metal elements selected from the group consisting of W, Nb and Ti supported on the surface of the oxygen storage and release material.

2. The exhaust gas purification apparatus (100) for lean combustion engines according to claim 1, wherein
the first base material (11) is one or more selected from the group consisting of a wall flow type catalyst carrier and a flow-through type catalyst carrier.

3. The exhaust gas purification apparatus (100) for lean combustion engines according to any one of claim 1 or 2,
further comprising one or more ammonia oxidation catalysts (AMOX) for oxidizing and removing ammonia on the downstream side of the exhaust gas flow channel of the first selective reducing catalyst (SCR_{L}).

4. The exhaust gas purification apparatus (100) for lean combustion engines according to any one of claims 1 to 3,
further comprising a particulate filter (PF), which collects particulate components in the exhaust gas and combusts or oxidizes and removes the particulate components, on the upstream side and/or the downstream side of the exhaust gas flow channel of the first selective reducing catalyst (SCR_{L}).

5. The exhaust gas purification apparatus (100) for lean combustion engines according to claim 4, wherein
the particulate filter (PF) is a catalyst-coated particulate filter (cPF) comprising at least an integral structure type carrier and a noble metal-containing catalyst layer provided on the integral structure type carrier.

6. The exhaust gas purification apparatus (100) for lean combustion engines according to any one of claims 1 to 5,
comprising a plurality of the oxidation catalysts (Ox),
wherein at least one of the oxidation catalysts (Ox) is arranged on the upstream side and/or the downstream side of the exhaust gas flow channel with respect to the first selective reducing catalyst (SCR_{L}).

7. The exhaust gas purification apparatus (100) for lean combustion engines according to any one of claims 1 to 6,
further comprising a second selective reducing catalyst (SCR), which adsorbs ammonia and brings the ammonia into contact with NOₓ to perform reduction, on the upstream side and/or the downstream side of the exhaust gas flow channel of the first selective reducing catalyst.

8. The exhaust gas purification apparatus (100) for lean combustion engines according to any one of claims 1 to 7, wherein
the oxygen storage and release material contains one or more selected from the group consisting of a ceria-based composite oxide and a ceria-zirconia-based composite oxide.

9. The exhaust gas purification apparatus (100) for lean combustion engines according to any one of claims 1 to 8, wherein
the zeolite is zeolite having an oxygen six-membered ring structure, an oxygen double six-membered ring structure, an oxygen eight-membered ring structure and/or an oxygen twelve-membered ring structure.

10. The exhaust gas purification apparatus (100) for lean combustion engines according to any one of claims 1 to 9, wherein
the zeolite is one or more selected from the group consisting of CHA, AEI, AFX, KFI, SFW, MFI and BEA.

11. The exhaust gas purification apparatus (100) for lean combustion engines according to any one of claims 1 to 10, wherein
the maximum amount of NH₃ adsorbed per unit volume of the second catalyst layer (L2) is smaller than the maximum amount of NH₃ adsorbed per unit volume of the first catalyst layer (L1) under a condition of NH₃ adsorption at 33% of the saturated adsorption amount.

12. The exhaust gas purification apparatus (100) for lean combustion engines according to any one of claims 1 to 11, wherein
the first base material (11) is zone-coated with the first catalyst layer (L1) and/or the second catalyst layer (L2).

13. The exhaust gas purification apparatus (100) for lean combustion engines according to any one of claims 1 to 12,
further comprising a heating device (Heater) for heating the exhaust gas passing through the exhaust gas flow channel.

14. The exhaust gas purification apparatus (100) for lean combustion engines according to any one of claims 1 to 13,
further comprising a plasma generating apparatus (P1) for plasma-treating the exhaust gas passing through the exhaust gas flow channel.

## Patentansprüche

1. Abgasreinigungsvorrichtung (100) für Magermotoren, umfassend mindestens:
einen oder mehrere Oxidationskatalysatoren (Ox), die in einem Abgasströmungskanal angeordnet sind und mindestens eines ausgewählt aus der Gruppe bestehend aus CO, HC, NO und NH₃ in einem von einem Magermotor abgegebenen Abgas oxidieren; eine Reduktionsmittelzuführeinheit (Red.) zum Zuführen eines oder mehrerer Reduktionsmittel ausgewählt aus der Gruppe bestehend aus einer Harnstoffkomponente und einer Ammoniakkomponente in den Abgasströmungskanal; und einen oder mehrere erste selektive Reduktionskatalysatoren (SCR_{L}), die auf der stromabwärtigen Seite des Abgasströmungskanals in Bezug auf die Reduktionsmittelzuführeinheit (Red.) angeordnet sind und die Ammoniak adsorbieren und das Ammoniak in Kontakt mit NOₓ bringen, um eine Reduktion durchzuführen, wobei
der erste selektive Reduktionskatalysator (SCR_{L}) ein erstes Basismaterial (11) und einen geschichteten Katalysator (21) umfasst, der auf dem ersten Basismaterial (11) bereitgestellt ist, und
der geschichtete Katalysator (21) mindestens eine erste Katalysatorschicht (L1), die mindestens Zeolith und ein auf dem Zeolith getragenes Übergangsmetallelement enthält, und eine zweite Katalysatorschicht (L2), die mindestens ein Sauerstoffspeicher- und - freisetzungsmaterial und ein Übergangsmetallelement enthält, umfasst, und mindestens die erste Katalysatorschicht (L1) und die zweite Katalysatorschicht (L2) in dieser Reihenfolge auf dem ersten Basismaterial (11) bereitgestellt sind,
die erste Katalysatorschicht (L1) mindestens den Zeolith und ein oder mehrere Elemente ausgewählt aus der Gruppe bestehend aus Cu, Fe, Ce, Mn, Ni, Co, Ca, Ag, Rh, Ru, Pd, Pt, Ir und Re getragen auf dem Zeolith enthält, **dadurch gekennzeichnet, dass**
die zweite Katalysatorschicht (L2) mindestens das Sauerstoffspeicher- und -freisetzungsmaterial und ein oder mehrere Übergangsmetallelemente ausgewählt aus der Gruppe bestehend aus W, Nb und Ti getragen auf der Oberfläche des Sauerstoffspeicher- und -freisetzungsmaterials enthält.

2. Abgasreinigungsvorrichtung (100) für Magermotoren nach Anspruch 1, wobei
das erste Basismaterial (11) eines oder mehrere ausgewählt aus der Gruppe bestehend aus einem Katalysatorträger vom Wandströmungstyp und einem Katalysatorträger vom Durchströmungstyp ist.

3. Abgasreinigungsvorrichtung (100) für Magermotoren nach einem der Ansprüche 1 oder 2,
die ferner einen oder mehrere Ammoniak-Oxidationskatalysatoren (AMOX) zur Oxidation und Entfernung von Ammoniak auf der stromabwärtigen Seite des Abgasstromkanals des ersten selektiven Reduktionskatalysators (SCR_{L}) umfasst.

4. Abgasreinigungsvorrichtung (100) für Magermotoren nach einem der Ansprüche 1 bis 3,
die ferner einen Partikelfilter (PF), der Partikelkomponenten im Abgas sammelt und die Partikelkomponenten verbrennt oder oxidiert und entfernt, auf der stromaufwärtigen Seite und/oder stromabwärtigen Seite des Abgasströmungskanals des ersten selektiven Reduktionskatalysators (SCR_{L}) umfasst.

5. Abgasreinigungsvorrichtung (100) für Magermotoren nach Anspruch 4, wobei
der Partikelfilter (PF) ein Katalysator-beschichteter Partikelfilter (cPF) ist, der mindestens einen Träger vom integralen Struktur-Typ und eine Edelmetall-enthaltende Katalysatorschicht umfasst, die auf dem Träger vom integralen Struktur-Typ bereitgestellt ist.

6. Abgasreinigungsvorrichtung (100) für Magermotoren nach einem der Ansprüche 1 bis 5,
der eine Vielzahl von Oxidationskatalysatoren (Ox) umfasst,
wobei mindestens einer der Oxidationskatalysatoren (Ox) auf der stromaufwärtigen Seite und/oder der stromabwärtigen Seite des Abgasströmungskanals in Bezug auf den ersten selektiven Reduktionskatalysator (SCR_{L}) angeordnet ist.

7. Abgasreinigungsvorrichtung (100) für Magermotoren nach einem der Ansprüche 1 bis 6,
die ferner einen zweiten selektiven Reduktionskatalysator (SCR), der Ammoniak adsorbiert und das Ammoniak mit NOₓ in Kontakt bringt, um eine Reduktion durchzuführen, auf der stromaufwärtigen Seiten und/oder stromabwärtigen Seite des Abgasströmungskanals des ersten selektiven Reduktionskatalysators umfasst.

8. Abgasreinigungsvorrichtung (100) für Magermotoren nach einem der Ansprüche 1 bis 7, wobei
das Sauerstoffspeicher- und -freisetzungsmaterial eines oder mehrere ausgewählt aus der Gruppe bestehend aus einem Verbundoxid auf Ceroxidbasis und einem Verbundoxid auf Ceroxid-Zirkoniumoxidbasis enthält.

9. Abgasreinigungsvorrichtung (100) für Magermotoren nach einem der Ansprüche 1 bis 8, wobei
der Zeolith ein Zeolith mit einer Sauerstoff-Sechsringstruktur, einer Sauerstoff-Doppelsechsringstruktur, einer Sauerstoff-Achtringstruktur und/oder einer Sauerstoff-Zwölfringstruktur ist.

10. Abgasreinigungsvorrichtung (100) für Magermotoren nach einem der Ansprüche 1 bis 9, wobei
der Zeolith einer oder mehrere ausgewählt aus der Gruppe bestehend aus CHA, AEI, AFX, KFI, SFW, MFI und BEA ist.

11. Abgasreinigungsvorrichtung (100) für Magermotoren nach einem der Ansprüche 1 bis 10, wobei
die maximale Menge an NH₃, die pro Volumeneinheit der zweiten Katalysatorschicht (L2) adsorbiert wird, kleiner ist als die maximale Menge an NH₃, die pro Volumeneinheit der ersten Katalysatorschicht (L1) adsorbiert wird, unter einer Bedingung von NH₃-Adsorption bei 33% der gesättigten Adsorptionsmenge.

12. Abgasreinigungsvorrichtung (100) für Magermotoren nach einem der Ansprüche 1 bis 11, wobei
das erste Basismaterial (11) mit der ersten Katalysatorschicht (L1) und/oder der zweiten Katalysatorschicht (L2) zonenbeschichtet ist.

13. Abgasreinigungsvorrichtung (100) für Magermotoren nach einem der Ansprüche 1 bis 12,
die ferner eine Heizvorrichtung (Heizer) zum Erwärmen des durch den Abgasstromkanal strömenden Abgases umfasst.

14. Abgasreinigungsvorrichtung (100) für Magermotoren nach einem der Ansprüche 1 bis 13,
die ferner eine Plasmaerzeugungsvorrichtung (P1) zur Plasmabehandlung des durch den Abgasströmungskanal strömenden Abgases umfasst.

## Revendications

1. Appareil de purification des gaz d'échappement (100) pour des moteurs à combustion pauvre, comprenant au moins :
un ou plusieurs catalyseurs d'oxydation (Ox) qui sont disposés dans un canal d'écoulement des gaz d'échappement et oxydent au moins un élément choisi dans le groupe constitué par CO, HC, NO et NH₃ dans un gaz d'échappement évacué d'un moteur à combustion pauvre ; une unité d'alimentation en agent réducteur (Red.) pour fournir un ou plusieurs agents réducteurs choisis dans le groupe constitué d'un composant d'urée et d'un composant d'ammoniac dans le canal d'écoulement des gaz d'échappement ; et un ou plusieurs premiers catalyseurs réducteurs sélectifs (SCR_{L}) disposés sur le côté aval du canal d'écoulement des gaz d'échappement par rapport à l'unité de fourniture d'agent réducteur (Red.) et qui adsorbent l'ammoniac et mettent l'ammoniac en contact avec les NOₓ pour effectuer la réduction, dans lequel
le premier catalyseur réducteur sélectif (SCR_{L}) comprend un premier matériau de base (11) et un catalyseur en couches (21) fourni sur le premier matériau de base (11), et
le catalyseur en couches (21) comprend au moins une première couche de catalyseur (L1) contenant au moins de la zéolite et un élément de métal de transition supporté sur la zéolite, et une deuxième couche de catalyseur (L2) contenant au moins un matériau de stockage et de libération de l'oxygène et un élément de métal de transition, et au moins la première couche de catalyseur (L1) et la deuxième couche de catalyseur (L2) sont fournies dans cet ordre sur le premier matériau de base (11),
la première couche catalytique (L1) contient au moins la zéolithe et un ou plusieurs éléments choisis dans le groupe constitué de Cu, Fe, Ce, Mn, Ni, Co, Ca, Ag, Rh, Ru, Pd, Pt, Ir et Re supportés sur la zéolithe, **caractérisé en ce que**
la deuxième couche de catalyseur (L2) contient au moins le matériau de stockage et de libération de l'oxygène et un ou plusieurs éléments de métaux de transition choisis dans le groupe constitué de W, Nb et Ti supportés sur la surface du matériau de stockage et de libération de l'oxygène.

2. Appareil de purification des gaz d'échappement (100) pour des moteurs à combustion pauvre selon la revendication 1, dans lequel
le premier matériau de base (11) est un ou plusieurs matériaux choisis dans le groupe constitué d'un support de catalyseur de type à écoulement mural et d'un support de catalyseur de type à écoulement continu.

3. Appareil de purification des gaz d'échappement (100) pour des moteurs à combustion pauvre selon l'une quelconque des revendications 1 ou 2,
comprenant en outre un ou plusieurs catalyseurs d'oxydation de l'ammoniac (AMOX) pour oxyder et éliminer l'ammoniac sur le côté aval du canal d'écoulement des gaz d'échappement du premier catalyseur réducteur sélectif (SCR_{L}).

4. Appareil de purification des gaz d'échappement (100) pour des moteurs à combustion pauvre selon l'une quelconque des revendications 1 à 3,
comprenant en outre un filtre à particules (PF), qui collecte les composants particulaires dans les gaz d'échappement et brûle ou oxyde et élimine les composants particulaires, sur le côté amont et/ou le côté aval du canal d'écoulement des gaz d'échappement du premier catalyseur réducteur sélectif (SCR_{L}).

5. Appareil de purification des gaz d'échappement (100) pour des moteurs à combustion pauvre selon la revendication 4, dans lequel
le filtre à particules (PF) est un filtre à particules revêtu d'un catalyseur (cPF) comprenant au moins un support de type structure intégrale et une couche de catalyseur contenant un métal noble fournie sur le support de type structure intégrale.

6. Appareil de purification des gaz d'échappement (100) pour des moteurs à combustion pauvre selon l'une des revendications 1 à 5,
comprenant une pluralité des catalyseurs d'oxydation (Ox),
dans lequel au moins un des catalyseurs d'oxydation (Ox) est disposé du côté amont et/ou du côté aval du canal d'écoulement des gaz d'échappement par rapport au premier catalyseur réducteur sélectif (SCR_{L}).

7. Appareil de purification des gaz d'échappement (100) pour des moteurs à combustion pauvre selon l'une des revendications 1 à 6,
comprenant en outre un deuxième catalyseur réducteur sélectif (SCR), qui adsorbe l'ammoniac et met l'ammoniac en contact avec les NOx pour effectuer la réduction, du côté amont et/ou du côté aval du canal d'écoulement des gaz d'échappement du premier catalyseur réducteur sélectif.

8. Appareil de purification des gaz d'échappement (100) pour des moteurs à combustion pauvre selon l'une des revendications 1 à 7, dans lequel
le matériau de stockage et de libération de l'oxygène contient un ou plusieurs éléments choisis dans le groupe constitué d'un oxyde composite à base de céria et d'un oxyde composite à base de céria-zircone.

9. Appareil de purification des gaz d'échappement (100) pour des moteurs à combustion pauvre selon l'une des revendications 1 à 8, dans lequel
la zéolithe est une zéolithe ayant une structure d'anneau à six chaînons d'oxygène, une structure d'anneau double à six chaînons d'oxygène, une structure d'anneau à huit chaînons d'oxygène et/ou une structure d'anneau à douze chaînons d'oxygène.

10. Appareil de purification des gaz d'échappement (100) pour des moteurs à combustion pauvre selon l'une des revendications 1 à 9, dans lequel
la zéolithe est une ou plusieurs zéolithes choisies dans le groupe constitué par CHA, AEI, AFX, KFI, SFW, MFI et BEA.

11. Appareil de purification des gaz d'échappement (100) pour des moteurs à combustion pauvre selon l'une des revendications 1 à 10, dans lequel
la quantité maximale de NH₃ adsorbé par unité de volume de la deuxième couche de catalyseur (L2) est inférieure à la quantité maximale de NH₃ adsorbé par unité de volume de la première couche de catalyseur (L1) dans une condition d'adsorption de NH₃ à 33 % de la quantité d'adsorption saturée.

12. Appareil de purification des gaz d'échappement (100) pour des moteurs à combustion pauvre selon l'une quelconque des revendications 1 à 11, dans lequel
le premier matériau de base (11) est recouvert par zone de la première couche de catalyseur (L1) et/ou de la deuxième couche de catalyseur (L2).

13. Appareil de purification des gaz d'échappement (100) pour des moteurs à combustion pauvre selon l'une quelconque des revendications 1 à 12,
comprenant en outre un dispositif de chauffage (réchauffeur) pour chauffer les gaz d'échappement passant dans le canal d'écoulement des gaz d'échappement.

14. Appareil de purification des gaz d'échappement (100) pour des moteurs à combustion pauvre selon l'une des revendications 1 à 13,
comprenant en outre un appareil de génération de plasma (P1) pour traiter par plasma les gaz d'échappement passant dans le canal d'écoulement des gaz d'échappement.
